# EUROPEAN PATENT APPLICATION

(11) **EP 2 071 847 A1**
(43) Date of publication of application: **17.06.2009**
(21) Application number: 07828692.9
(22) Date of filing: 28.09.2007
(51) Int. Cl.: H04N 7/173, G06F 13/00

(54) **INFORMATION PROCESSING DEVICE AND METHOD, AND PROGRAM**

(30) Priority: 29.09.2006 JP 2006269125; 27.12.2006 JP 2006352008
(71) Applicant: Sony Corporation, Tokyo (JP)
(72) Inventor: ASAI, Nobuakic/o SONY CORPORATION, Tokyo,1080075 (JP)
(74) Representative: Thévenet, Jean-Bruno
(86) International application number: PCT/JP2007/068951
(87) International publication number: WO 2008/038757

(57) **Abstract**

The present invention relates to an information processing apparatus and method, and a program which ensure that content can be played back. In a case where content and metadata necessary to play back the content are received from a content server via the Internet, a module dtSilk 211 obtains, via the Internet, metadata of content for which a playback order has been made by a user.
A module HttpClient 223 obtains, via the Internet, the content for which playback order has been made by the user. When the content is obtained by the module HttpClient 223, a process performed by the module dtSilk 211 is switched to a process performed by the module HttpClient 223.

## Description

### Technical Field

The present invention relates to an information processing apparatus and method, and a program, and more specifically to an information processing apparatus and method, and a program which ensure that content can be played back.

### Background Art

Providing image information via the Internet has been proposed (see, for example, Patent Document 1). In addition, integration of standards for television receivers having a function of connecting to the Internet has been recently developed by domestic home electric appliance manufacturers (for example, Non-Patent Document 1). The realization of it would allow users to view a large volume of moving images sent via the Internet using television receivers, and would also provide easy retrieval of various types of information using the television receivers.

Patent Document 1: Japanese Unexamined Patent Application Publication No. 2002-344936

Non-Patent Document 1: "Network TV Will Be Sold during the Next Fiscal Year" on the 1st page of the morning issue of the Nihon Keizai Shimbun (The Nikkei), issued on August 3, 2006

### Disclosure of Invention

### Technical Problem

Incidentally, in order to realize such an apparatus, it is desired to allow quick and reliable display of images even when general users who are not necessarily familiar with an operation for utilizing the Internet operate the apparatus.

The present invention has been made in view of such a situation, and is intended to ensure that content can be played back.

### Technical Solution

An aspect of the present invention provides an information processing apparatus that controls a process of receiving content from an external apparatus via a network, the information processing apparatus including browsing means for executing a browse function via the network, playback means for obtaining the content via the network and playing back the content, the content being selected by a user, and switching means for switching a process performed by the browsing means when playback performed by the playback means is to be executed.

The switching means can perform switching by causing the process performed by the browsing means to be stopped.

The switching means can cause the process performed by the browsing means to be recovered when the playback performed by the playback means has been terminated.

The browsing means can obtain, via the network, metadata for controlling playback of the content.

Analysis means for analyzing the metadata and storage means for storing the analyzed metadata can further be included.

The browsing means and the playback means can form first processing means for executing a process with the external apparatus via the network, the switching means can form second processing means for executing a process regarding an input from the user, and the second processing means can further include accepting means for accepting an instruction from the user.

The switching means can instruct an amount of the content to be obtained by using a data amount when special playback is to be executed.

An aspect of the present invention further provides an information processing method of controlling a process of receiving content from an external apparatus via a network, and a program for causing a computer to execute the method, the information processing method and the program including a browsing step of executing a browse function via the network, a playback step of obtaining the content via the network and playing back the content, the content being selected by a user, and a switching step of switching a process performed by the browsing step when playback performed by the playback step is to be executed.

In an aspect of the present invention, a browse function is executed via a network, and content selected by a user is obtained via the network and is played back. And when playback is to be executed, the process of the browse function is switched.

### Advantageous Effects

As mentioned above, according to an aspect of the present invention, it is ensured that content can be played back.

### Brief Description of Drawings

[Fig. 1] Fig. 1 is a block diagram showing a structure of an embodiment of a content providing system to which the present invention is applied.
[Fig. 2] Fig. 2 is a diagram explaining buttons of a remote controller.
[Fig. 3] Fig. 3 is a diagram showing a structure of a module.
[Fig. 4] Fig. 4 is a diagram showing syntax of a resource list.
[Fig. 5] Fig. 5 is a diagram showing attribute information.
[Fig. 6] Fig. 6 is a diagram showing attribute information.
[Fig. 7] Fig. 7 is a diagram showing privilege information.
[Fig. 8] Fig. 8 is a diagram showing control information.
[Fig. 9] Fig. 9 is a diagram showing a state transition of a receiving apparatus.
[Fig. 10] Fig. 10 is a diagram showing a portal screen.
[Fig. 11] Fig. 11 is a diagram showing a playback screen.
[Fig. 12] Fig. 12 is a diagram showing a banner display.
[Fig. 13] Fig. 13 is a diagram showing an option menu.
[Fig. 14] Fig. 14 is a diagram showing an operation panel.
[Fig. 15] Fig. 15 is a diagram showing the display of content information.
[Fig. 16] Fig. 16 is a diagram showing the display of content information.
[Fig. 17] Fig. 17 is a block diagram showing a structure of a processing unit AVPPC.
[Fig. 18] Fig. 18 is a block diagram showing a structure of a processing unit EEGS.
[Fig. 19] Fig. 19 is a flowchart explaining a process during normal playback.
[Fig. 20] Fig. 20 is a flowchart explaining a process during normal playback.
[Fig. 21] Fig. 21 is a flowchart explaining a pause and playback process.
[Fig. 22] Fig. 22 is a flowchart explaining a process during special playback.
[Fig. 23] Fig. 23 is a flowchart explaining a process during special playback.
[Fig. 24] Fig. 24 is a flowchart explaining a process during special playback.
[Fig. 25] Fig. 25 is a diagram illustrating a structure of a table that defines skip amounts.
[Fig. 26] Fig. 26 is a diagram showing the relationship between the playback time and the playback data amount.
[Fig. 27] Fig. 27 is a flowchart explaining a process during special playback.
[Fig. 28] Fig. 28 is a diagram explaining a skip amount during special playback.

### Explanation of Reference Numerals

1 content providing system, 11 the Internet, 12 receiving apparatus, 14 content server, 15 DRM server, 21 storage unit, 22 communication unit, 23 control unit, 101 playback position display slider bar, 102 special playback moving destination time, 103 playback duration, 201 processing unit AVPPC, 212 module dtSilkCore, 213 module dtIfSilk, 214 module dtAppUi, 215 module dtBrowserApp, 216 module TVC, 217 metadata parser, 218 shared memory, 219 module dtMintX, 220 module MintProxy, 221 module DtNetEquipmentSrv, 222 module dtNetPlayer, 223 module HttpClient, 251 processing unit EEGS261 module TVCSrv, 262 module TVCConnector, 263 module xAppStateMgr, 264 module MoviePlayer, 265 module xPlayerEngine, 266 module xNetEquipmentSrv, 267 module, 268 module xDTPInvoker, 269 module xDTVSrv, 270 module xImmControl

### Best Mode for Carrying Out the Invention

An embodiment of the present invention will be explained hereinafter with reference to the drawings.

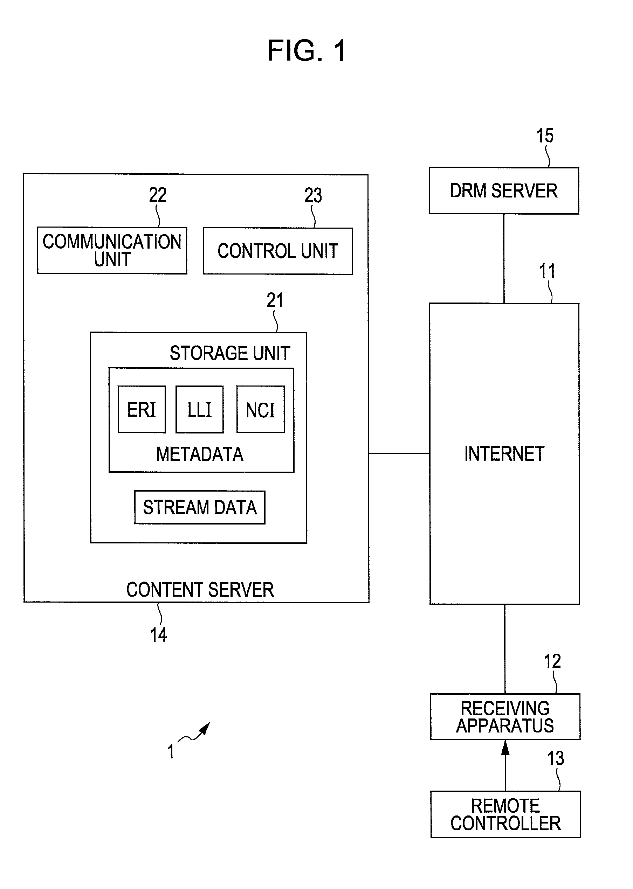

Fig. 1 illustrates a structure of an embodiment of a content providing system serving as an information processing system to which the present invention is applied. The content providing system 1 is formed of a receiving apparatus 12, a content server 14, and a DRM server 15, which are connected to the Internet 11 that is a typical network. Note that a large number of receiving apparatuses 12 are actually connected although only one receiving apparatus 12 is shown in Fig. 1.

The receiving apparatus 12 serving as an information processing apparatus is formed of, for example, a television receiver, and displays content provided from the content server 14 serving as an external apparatus via the Internet 11 to provide it to a user. The user operates a remote controller 13 to control the operation of the receiving apparatus 12.

The DRM server 15 manages the licensing of content provided by the content server 14.
Specifically, the DRM server 15 determines whether or not the user's receiving apparatus 12 has a license for certain content, and assigns, for example, a key for decoding data of encrypted fee-based content to the user's receiving apparatus 12 having the license to permit viewing of the fee-based content.

When the user orders the viewing of certain content by operating the remote controller 13, the receiving apparatus 12 obtains a metadata file necessary for playback control of the content from the content server 14 via the Internet 11. Based on the metadata, the receiving apparatus 12 obtains a license (key) for viewing fee-based content from the DRM server 15 via the Internet 11. If the license is obtained, the receiving apparatus 12 receives the content from the content server 14 via the Internet 11. Thereby, the user can view the content. Free-of-charge content can be freely viewed using the receiving apparatus 12 without the license being obtained.

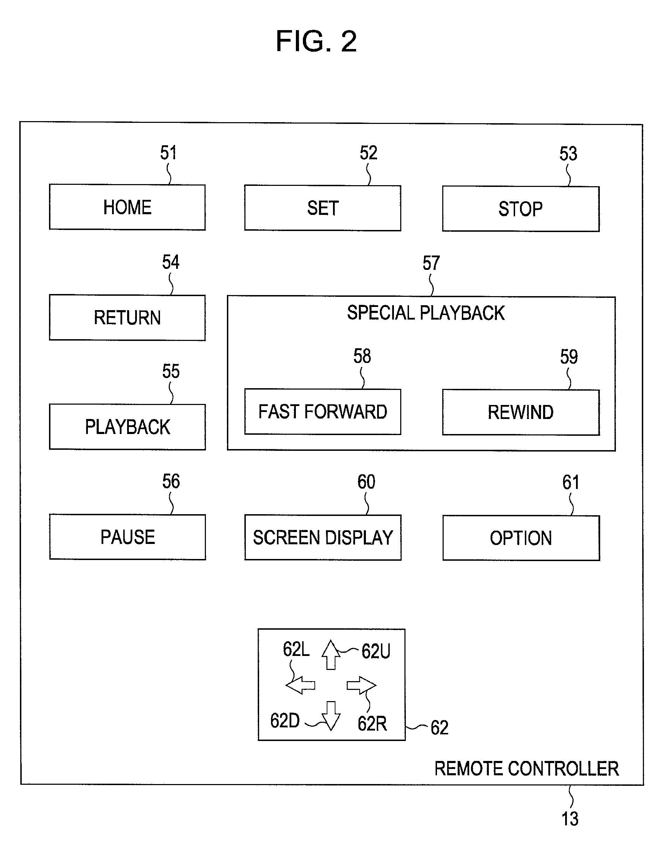

Fig. 2 illustrates a structure of buttons of an embodiment of the remote controller 13. In this embodiment, a home button 51, a set button 52, a stop button 53, a return button 54, a playback button 55, a pause button 56, a special playback button 57, a screen display button 60, an option button 61, and a direction button 62 composed of an up button 62U, a down button 62D, a left button 62L, and a right button 62R are provided.

The home button 51 is operated when a display screen is to be returned to a cross-media-bar display state. The set button 52 is operated when a process is to be set. The stop button 53 is operated when playback is to be stopped. The return button 54 is operated when the screen is to be returned to the previous screen. The playback button 55 is operated when the playback of content is to be started. The pause button 56 is operated when the playback of content is to be temporarily stopped.

The special playback button 57 is a button operated when special playback is to be executed, and is formed of a fast forward button 58 and a rewind button 59. The fast forward button 58 is operated when content is to be quickly played back in the forward direction, and the rewind button 59 is operated when content is to be quickly played back in the reverse direction. The term quickly means a speed higher than a normal playback speed, and is represented by, for example, a speed which is ±n times a normal playback speed, assuming that the normal playback speed is set to 1, where n is a numerical value greater than 1. In many cases, n is set to an integer, but may not necessarily be an integer. Further, due to its functional nature, an actual speed in a state displayed as n-times fast playback to the user may not be needed to be exactly n times but may be substantially n times the normal speed.

The screen display button 60 is operated when display or non-display of an operation panel is to be selected. The option button 61 is operated when display or non-display of an option menu is to be selected. The up button 62U, the down button 62D, the left button 62L, and the right button 62R are operated when a pointer is to be moved up, down, left, and right, respectively.

The content server 14 has a storage unit 21, a communication unit 22, and a control unit 23. The storage unit 21 has stream data stored therein, which is content data to be provided to the receiving apparatus 12 via the Internet 11. The stream data is mainly formed of moving image data and audio data. The storage unit 21 further has stored therein metadata for controlling various processes, particularly, playback, of the stream data. The communication unit 22 communicates with the receiving apparatus 12 or the DRM server 15 via the Internet 11. The control unit 23 controls the overall operation of the content server 14.

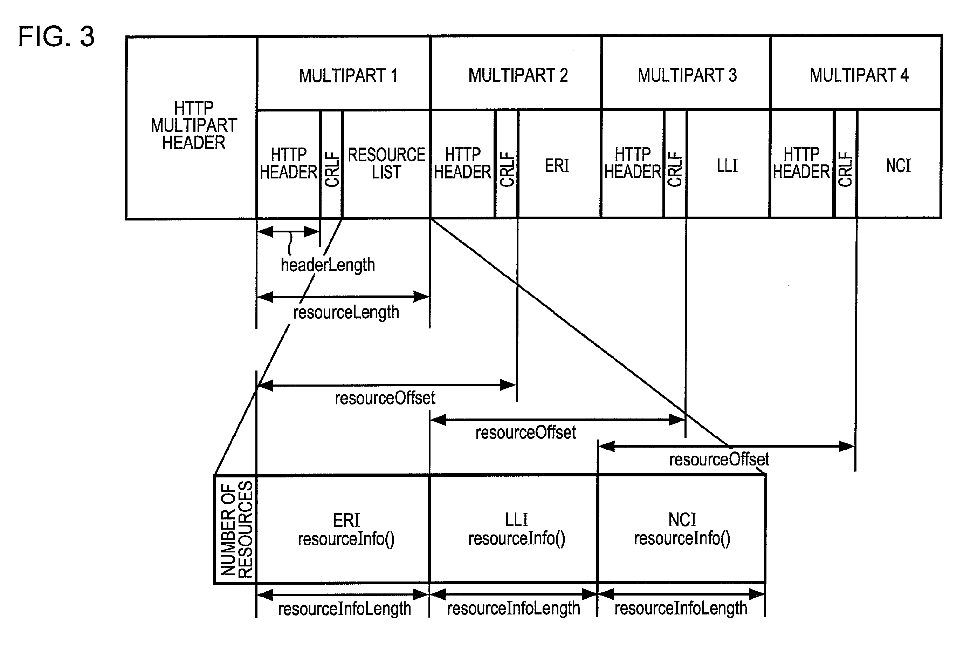

In the present embodiment, the communication unit 22 transmits the metadata via the Internet 11 in transmission units called modules using a carousel transmission scheme for repeated transmission. Fig. 3 illustrates a basic structure of a module serving as a transmission unit. The module is formed of an HTTP multipart header specified in the HTTP (Hypertext Transfer Protocol)/1.1, and a subsequent entity body. In this embodiment, one entity body is further formed of parts, i.e., multiparts 1 to 4. That is, a multipart form in which four parts are arranged in one entity body is used to transmit metadata composed of attribute information ERI, privilege information LLI, and control information NCI.

The HTTP multipart header that represents the multipart form is followed by the multiparts 1 to 4 each of which is formed of an HTTP header, a CRLF (Carriage Return/Line Feed), and an entity body. The HTTP header stores Content-Location that represents the position of the content (for example, the position on the content server 14, such as http://huge/doc/abc.eri) or Content-Type that represents the type of the content (for example, the type of the content, such as text/xml;chrset="UTF-8").

The entity body of the multipart 1 stores a resource list, the entity body of the multipart 2 stores the attribute information ERI, the entity body of the multipart 3 stores the privilege information LLI, and the entity body of the multipart 4 stores the control information NCI.

ERI (Entry Resource Information) is content-unique attribute information that does not depend on a reference destination or delivery style of target content. LLI (License Link Information) is privilege information such as information regarding licensing or privilege protection for target content. NCI (Network content Control Information) is control information regarding streaming reception. Each piece of metadata is written in XML (Extensible Markup Language).

Each multipart has a length denoted by resourceLength, and its HTTP header has a length denoted by headerLength.

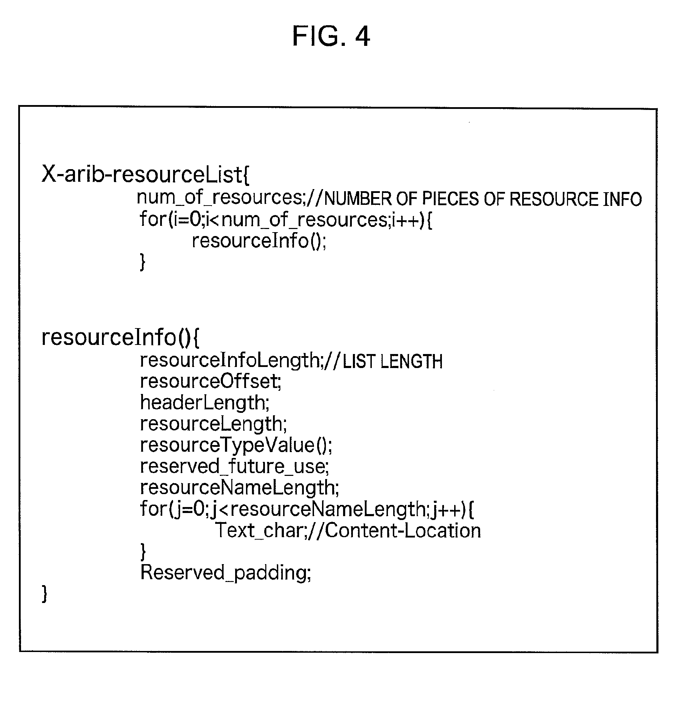

Fig. 4 illustrates syntax of the resource list written in the multipart 1. The syntax X-arib-resourceList{ } is standardized in written standards of ARIB (Association of Radio Industries and Businesses). ARIB is an organization designated by the Minister of Internal Affairs and Communications as "the center of promotion of the efficient use of the radio spectrum" as specified by the Radio Law, and is conducting activities such as research and study regarding the efficient use of the radio spectrum in the communications/broadcasting field, research development, and technical research in cooperation standardization organizations.

In the X-arib-resourceList{ }, num_of_resources represents the number of resources contained in the same module. In the case of this embodiment, since three pieces of metadata composed of the attribute information ERI, the privilege information LLI, and the control information NCI are stored in one module, three pieces of resourceInfo( ) are written. Therefore, as shown in Fig. 3, the resource list is formed of the number of resources, resourceInfo( ) of the attribute information ERI, resourceInfo( ) of the privilege information LLI, and resourceInfo( ) of the control information NCI.

In the present embodiment, in the resourceInfo( ), as shown in Fig. 4, resourceInfoLength, resourceOffset, headerLength, resourceLength, resourceTypeValue, resrved_future_use, and resourceNameLength are written along with a necessary number of pieces of Text_char.

As shown in Fig. 3, the resourceInfoLength represents the length of each piece of resourceInfo( ). The resourceOffset represents the length from the top of each piece of resourceInfo( ) to the top of corresponding information. That is, in the resourceInfo( ) of the attribute information ERI, the length from the top thereof to the top of the attribute information ERI in the entity body of the multipart 2 is represented; in the resourceInfo( ) of the privilege information LLI, the length from the top thereof to the top of the privilege information LLI in the entity body of the multipart 3 is represented; and in the resourceInfo( ) of the control information NCI, the length from the top thereof to the top of the control information NCI in the entity body of the multipart 4 is represented.

The headerLength represents the length of the HTTP header of each part. The resourceTypeValue contains Content-Type. The resrved_future_use is reserved for future use. The resourceNameLength represents the length (size) of a file name represented by Text_char. The Text_char is the name of a file and represents the position of the content

### (Content-Location).

In this manner, in this embodiment, the attribute information ERI, the privilege information LLI, and the control information NCI are stored in one module using the multipart form and are sent. Therefore, as compared with a case where three related pieces of metadata are individually sent using separate modules, an event in which only one of them does not reach the receiving apparatus 12 is suppressed. Additionally, it is also easy to separate/extract the attribute information ERI, the privilege information LLI, and the control information NCI from each part. Therefore, it is ensured that metadata can be sent from the content server 14 and can be utilized by the receiving apparatus 12. Consequently, besides normal playback of content provided via the Internet 11, special playback such as fast forward or rewind can also be executed.

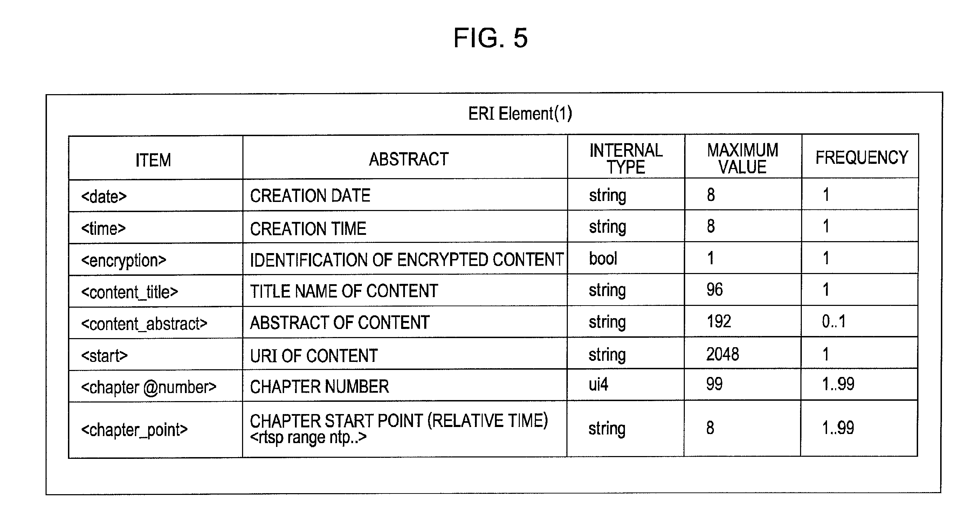

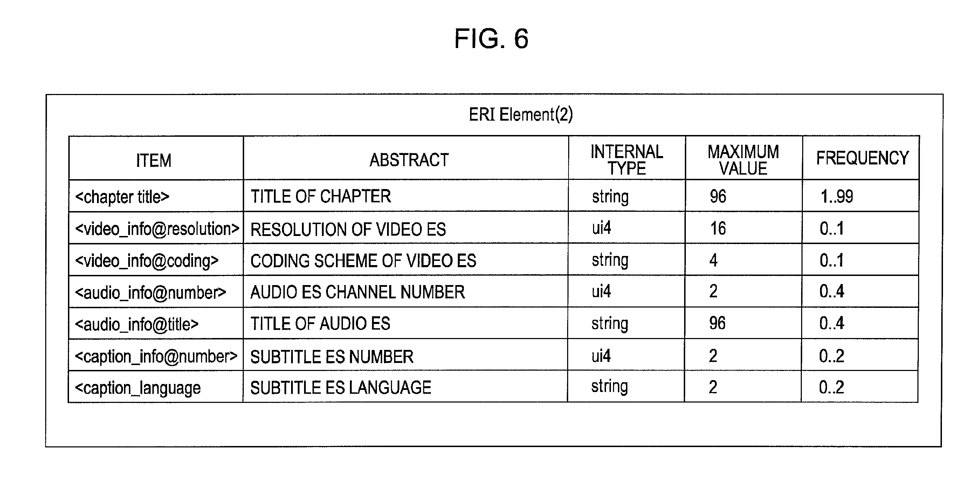

Figs. 5 and 6 illustrate a specific example of the attribute information ERI. As shown in the figures, a creation date, a creation time, identification of encrypted content, a title name of the content, an abstract of the content, a URI (Uniform Resource Locator) of the content, a chapter number, a chapter start point (relative time), a title of a chapter, a resolution of a video ES (Elementary Stream), a coding scheme of the video ES, an audio ES channel number, a title of an audio ES, a subtitle ES number, a subtitle ES language, etc., are set as the attribute information ERI.

Note that, in Figs. 5 and 6, "string" represents a character string, "bool" represents true/false, and "ui (unsigned integer) 4" represents an unsigned integer. A maximum value represents a maximum value that can be used, and a frequency represents the number of times writing can be performed in corresponding information. For example, the title of a chapter is represented by up to 96 characters and has a frequency of 1 to 99. The audio ES channel number is represented by up to two unsigned integers and has a frequency of 0 to 4. The identification of encrypted content is represented by up to one number and has a frequency of 1.

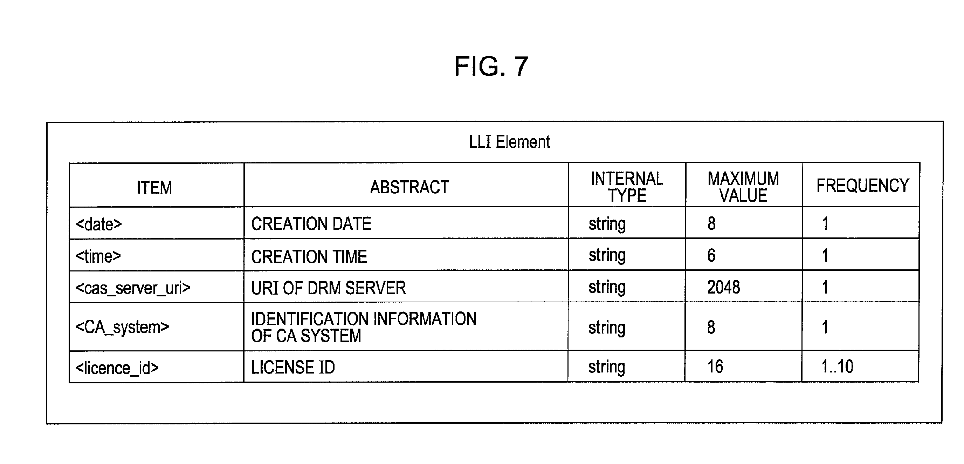

Fig. 7 illustrates a specific example of the privilege information LLI. As shown in the figure, a creation date, a creation time, a URI (Uniform Resource Identifier) of the DRM server, identification information of a CA (Conditional Access) system, a license ID, etc., are set as the privilege information LLI.

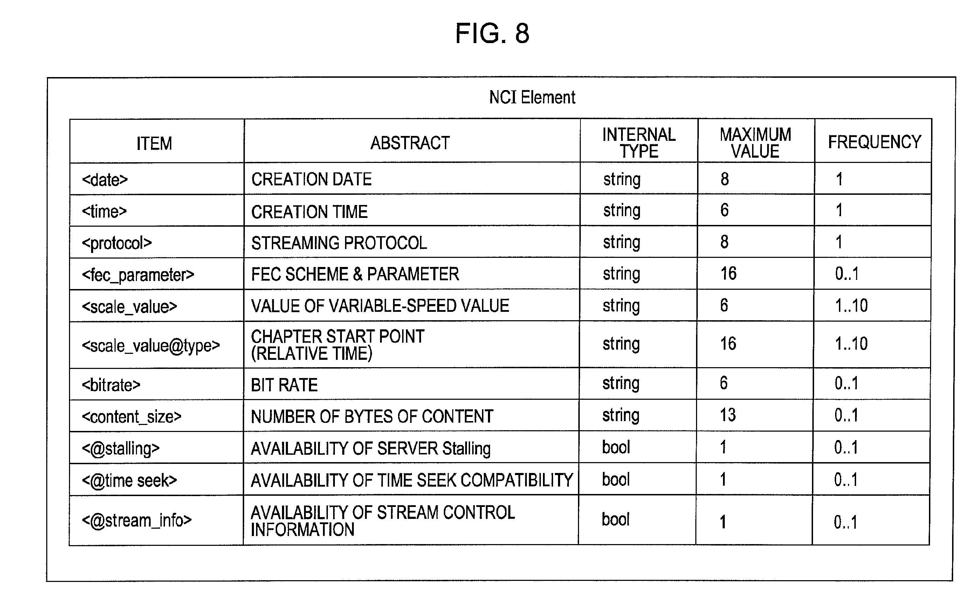

Fig. 8 illustrates a specific example of the privilege information NCI. As shown in the figure, a creation date, a creation time, a streaming protocol, an FEC (Forward Error Collection) scheme and parameter, the value of a variable-speed value, a chapter start point (relative time), a bit rate, the number of bytes of content, availability of server stalling, availability of time seek compatibility, availability of stream control information, etc., are set as the privilege information NCI.

In the present embodiment, the value of a variable-speed value corresponding to a playback speed during special playback is specified as a data amount, specifically, the number of bytes. That is, for example, in the case of variable-speed playback in the forward direction (in the case of fast forward playback), data at a position shifted by 512 kB is specified for double-speed playback, and data at a position shifted by 512 x 8 kB is specified for triple-speed playback. In the case of variable-speed playback in the reverse direction (in the case of rewind playback), data at a position shifted by 512 kB is specified for minus-double-speed playback, and data at a position shifted by 512 x 8 kB is specified for minus-triple-speed playback. That is, a value of an integral multiple of 512 kB, which is a unit amount of image data in the compressed state, as a reference is specified. This unit amount can be appropriately determined, or can be set to a data amount corresponding to a certain playback duration of an average image (for example, a playback duration of about 1 second).
And this data amount can be set to a data amount in the compressed state. This facilitates quick data retrieval.

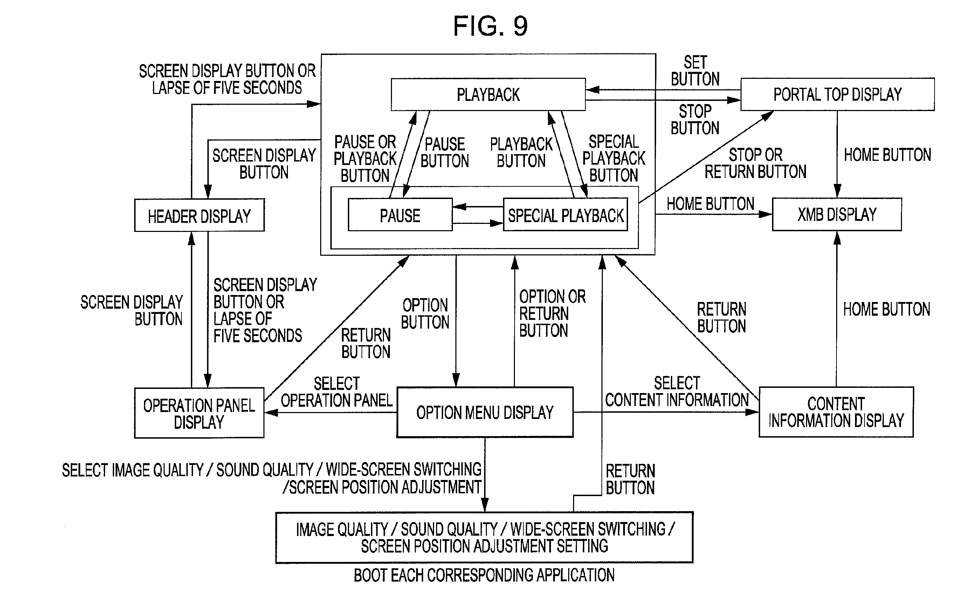

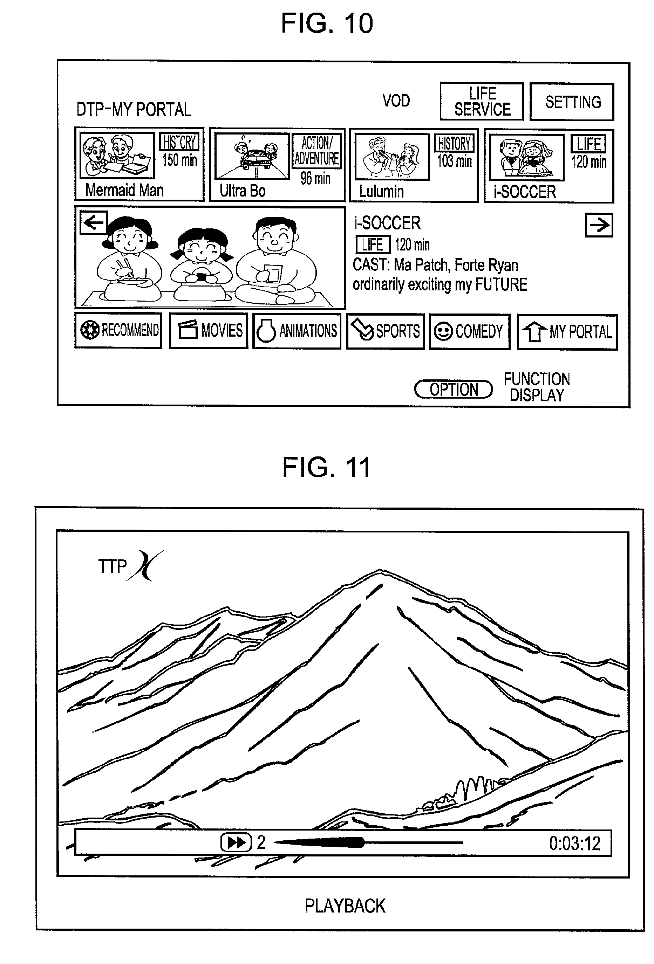

Fig. 9 illustrates a transition of a playback state. The user of the receiving apparatus 12 first accesses a portal site of the content server 14 via the Internet 11 when he or she is to receive content provided from the content server 14. At this time, the receiving apparatus 12 is in a "Portal TOP" state, and a portal screen as shown in Fig. 10 is displayed.

In this state, the user places a pointer displayed on the screen onto an icon of certain content, and operates the set button 52. Then, the receiving apparatus 12 is in a "playback" state, where the playback of the content is started and an image as shown in Fig. 11 is displayed.

When the pause button 56 is operated during the playback of the content, the playback operation is paused, and a "pause" state is set. When the pause button 56 or the playback button 55 is operated in the "pause" state, the "playback" state is set. When the special playback button 57 is operated in the "playback" state, a "special playback" state is set. That is, when the fast forward button 58 is operated, variable-speed playback is performed in the forward direction, and when the rewind button 59 is operated, variable-speed playback is performed in the reverse direction. If the playback button 55 is operated in the "special playback" state, the state returns to the "playback" state. Even in the "special playback" state, pause or cancellation thereof can be performed in response to the operation of the pause button 56.

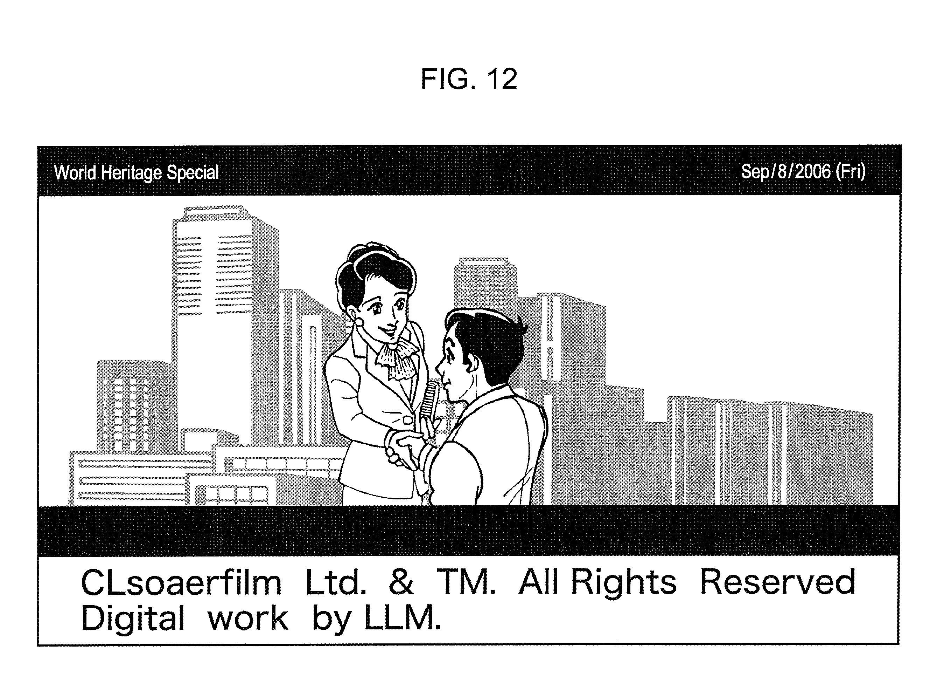

When the screen display button 60 is operated in the "playback", "pause", or "special playback" state, a "header display" state is set. At this time, as shown in Fig. 12, the title of content "World Heritage Special" and creation date information of the content "Sep/8/2006 (Fri)" are displayed on a banner for only a certain period of time (for example, five seconds). If time information exists, the time information is also displayed. When the screen display button 60 is operated again in this state or when a certain period of time (for example, five seconds) has elapsed, the state returns to the "playback", "pause", or "special playback" state.

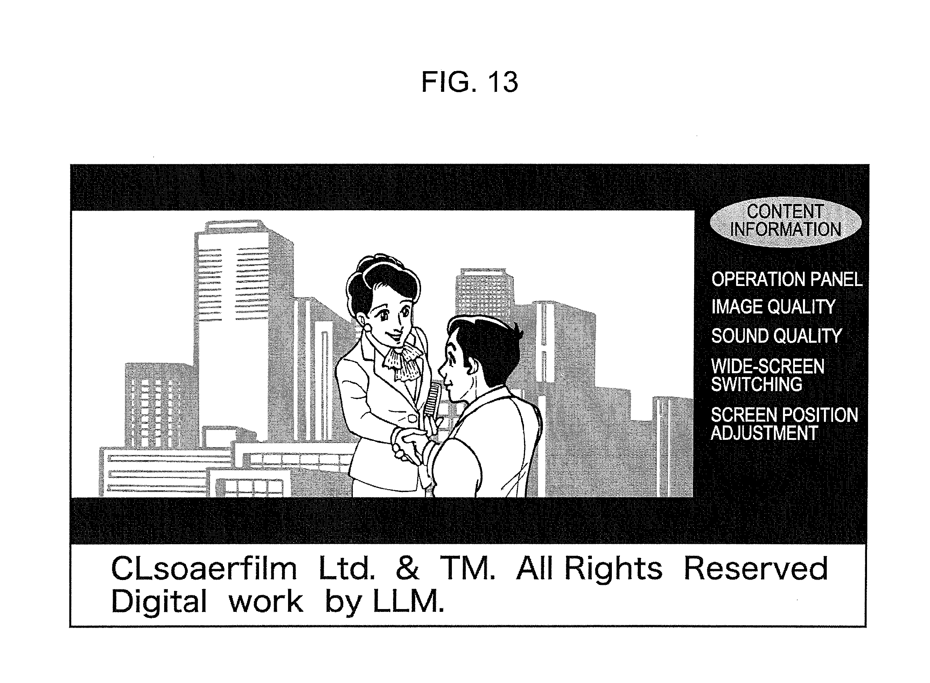

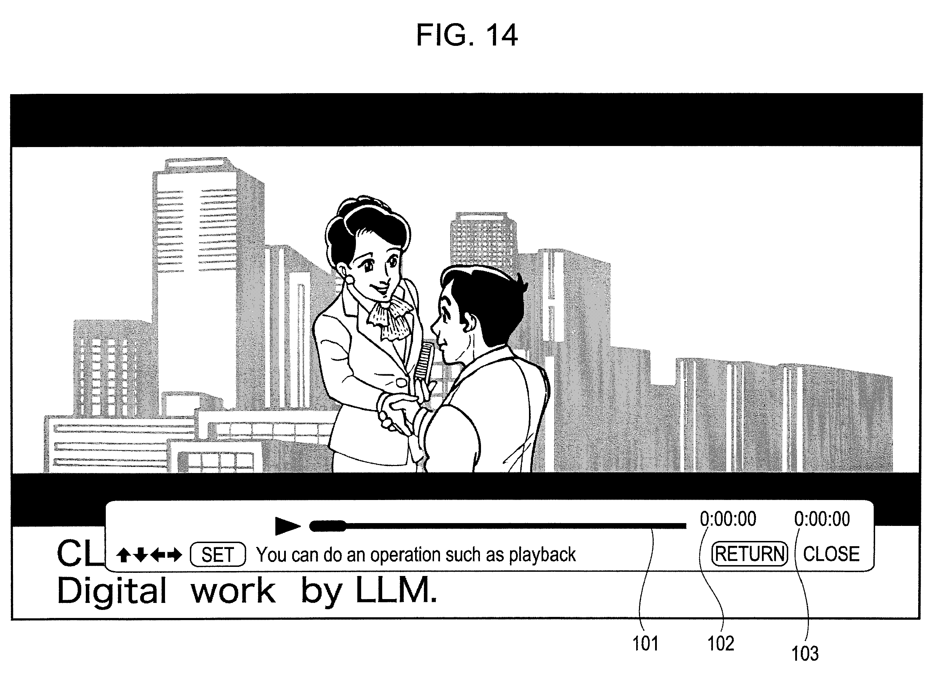

When the option button 61 is operated in the "playback", "pause", or "special playback" state, an "option menu display" state is set, and an option menu as shown in Fig. 13 is displayed on the right side of the screen. In the option menu, any item of "content information", "operation panel", "image quality", "sound quality", "wide-screen switching", and "screen position adjustment" is selectable. When the "operation panel" is selected in this state, an "operation panel display" state is set, and a screen as shown in Fig. 14 is displayed.

In the "operation panel display" state, a playback position display slider bar 101 is displayed on the lower side of the screen. The position of a slide button in the playback position display slider bar 101 represents a playback position of the content, and a playback duration 103 displayed on the right side of the playback position display slider bar 101 represents the playback position in terms of time elapsed from the beginning of the content.

In the "operation panel display" state, each time the left button 62L of the direction button 62 of the remote controller 13 is operated, the rewind speed is increased up to two stages, i.e., minus double speed and minus triple speed. When the left button 62L is pressed for a long time, the playback position returns based on the time specification. Likewise, each time the right button 62R is operated, the fast forward speed is increased up to two stages, i.e., double speed and triple speed. When the right button 62R is pressed for a long time, the playback position returns based on the time specification. When the up button 62U is operated, the playback position is moved to a position which is 27 seconds after the current position. When the down button 62D is operated, the playback position is moved to a position which is 15 seconds before the current position. In a special playback moving destination time 102, the time of a moving destination during special playback based on the operation is displayed. When the set button 52 is operated, the special playback is terminated and returned to normal playback. When the return button 54 is operated, the state is returned to the "playback", "pause", or "special playback".

When the screen display button 60 is operated in the "operation panel display" state, a transition to the "header display" state occurs. When the screen display button 60 is further operated or when five seconds have elapsed, the state is returned to the "operation panel display".

When the "image quality", the "sound quality", the "wide-screen switching", or the "screen position adjustment" is selected in the "option menu display", the state is set to an "image quality/sound quality/wide-screen switching/screen position adjustment setting", where image quality, sound quality, wide-screen switching, or screen position adjustment is available. When the return button 54 is operated in the "image quality/sound quality/wide-screen switching/screen position adjustment setting" state, the state is returned to the "playback", "pause", or "special playback". When the "content information" is selected in the "option menu display" state, a transition of the state to a "content information display" normal occurs. When the option button 61 or the return button 54 is operated in the "option menu display" state, a transition of the state to the "playback", "pause", or "special playback" state occurs.

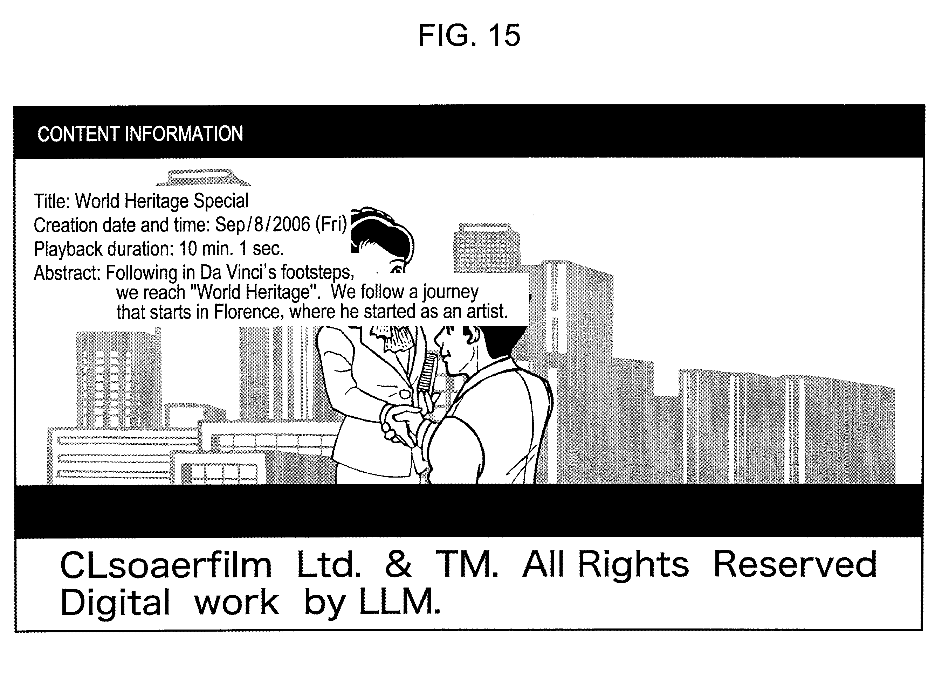

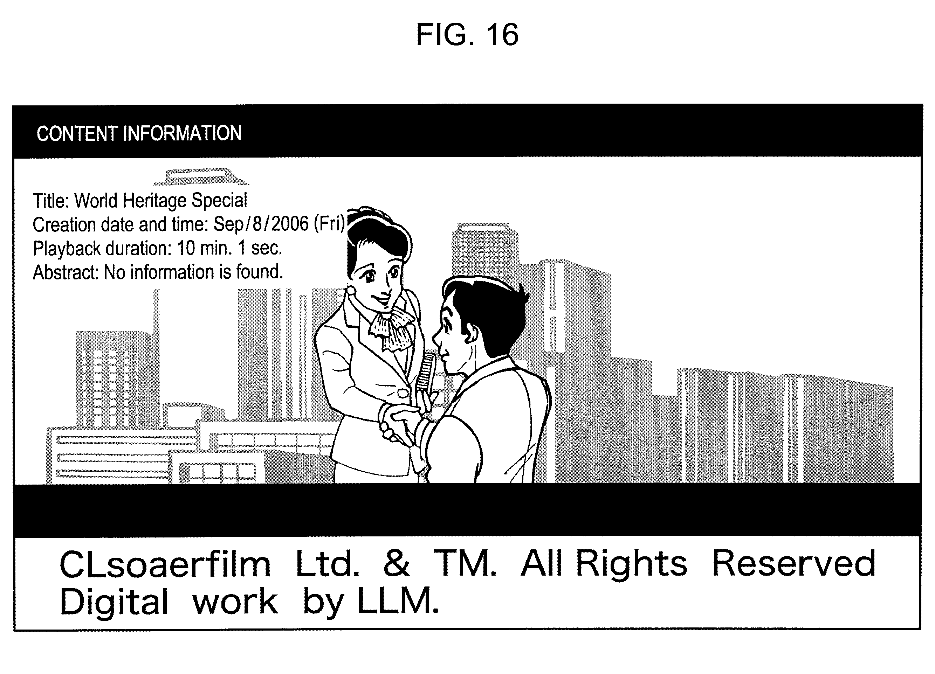

In the "content information display" state, a screen as shown in Fig. 15 is displayed if an abstract of the content exists, or a screen as shown in Fig. 16 is displayed otherwise. In this embodiment, the title of the content "World Heritage Special", the creation date and time "Sep/8/2006 (Fri)", and the playback duration "10 min. 1 sec." are individually displayed. Further, if the abstract exists, as shown in Fig. 15, a message representative of the abstract "Following in Da Vinci's footsteps, we reach 'World Heritage'. We follow a journey that starts in Florence, where he started as an artist." is displayed and, if not, as shown in Fig. 16, the message "no information is found" is displayed.

When the return button 54 is operated in the "content information display" state, the state is returned to the "playback", "pause", or "special playback". When the home button 51 is operated in the "content information display" state, a transition to an "XMB display" state occurs. The "XMB display" means "cross-media-bar display". In this state, a horizontal bar or a vertical bar is scrolled so that an item to be selected can be positioned at a position where the horizontal bar and the vertical bar intersect, thereby displaying an image of a GUI for selecting a certain item.

When the home button 51 is operated in the "playback", "pause", or "special playback" state or in the "Portal TOP" state, a transition to the "XMB display" state occurs. When the stop button 53 or the return button 54 is operated in the "pause" or "special playback" state, a transition to the "Portal TOP" state occurs.

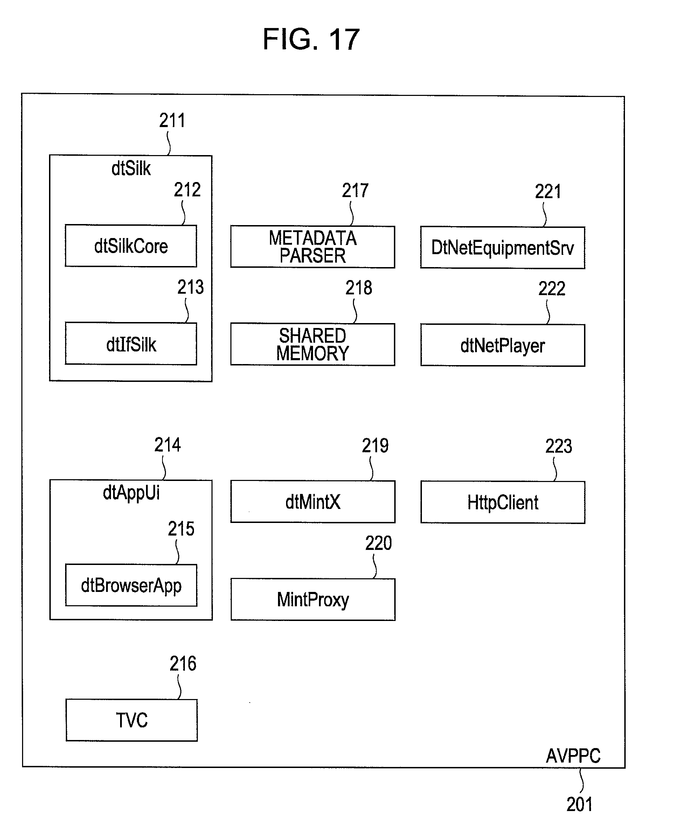

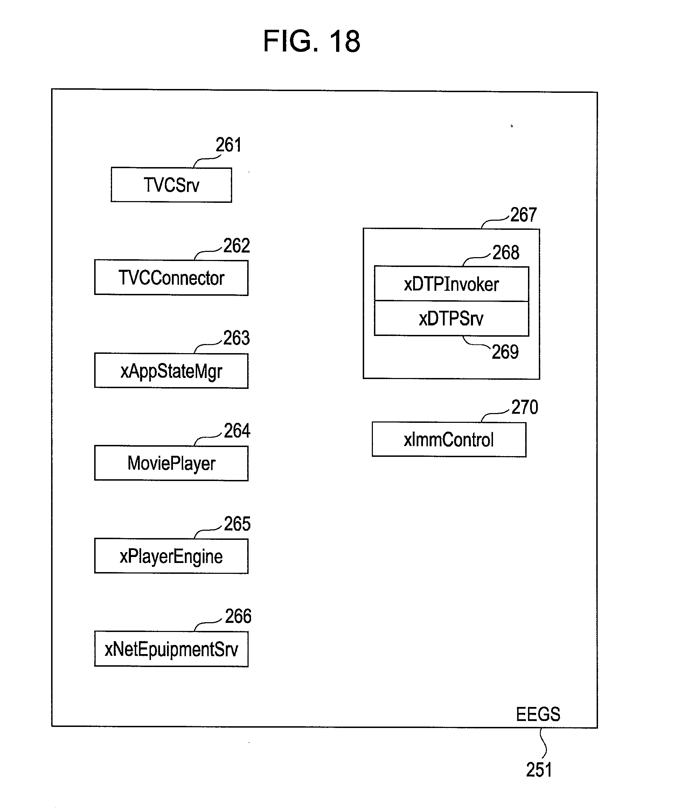

The receiving apparatus 12 has a processing unit AVPPC (Audio Visual Power PC) 201 and a processing unit EEGS (Emotion Engine Graphic Synthesizer) 251 as processing means, as shown in Figs. 17 and 18. The processing unit AVPPC 201 and the processing unit EEGS 251 are formed of, for example, a CPU (Central Processing Unit), more specifically, a program executed by the CPU. The processing unit AVPPC 201 executes a process of obtaining content or metadata mainly from the content server 14 via the Internet 11 and playing back it. The processing unit EEGS 251 loads an instruction mainly from the user, and, based on it, executes control of the playback process of the processing unit AVPPC 201.

The processing unit AVPPC 201 has a module dtSilk 211 having a module dtSilkCore 212 and a module dtIfSilk 213, a module dtAppUi 214 having a module dtBrowserApp 215, a module TVC (Television Collaborator) 216, a module metadata parser 217, a shared memory 218, a module dtMintX 219, a module MintProxy 220, a module DtNetEquipmentSrv 221, a module dtNetPlayer 222, and a module HttpClient 223.

The module dtSilkCore 212 of the module dtSilk 211 that executes a browse function is a browser for browsing a web page that is a document which is made public on the Internet using a WWW (World Wide Web) system, and downloads an HTML (Hyper Text Markup Language) file, an XML file, an image file, a music file, etc., to display and play back them through layout analysis. Thus, for example, the screen of the portal site as shown in Fig. 10 is displayed. In the present embodiment, the module dtSilkCore 212 executes processes relating to various browse functions via the Internet 11, and also performs, as one of them, a process of obtaining metadata of selected content. The module dtIfSilk 213 is an HTML or XML help application. The module dtBrowserApp 215 of the module dtAppUi 214 for booting an application is a module for booting the browser. The module TVC 216 performs scheduling between the modules in the processing unit AVPPC 201 in cooperation with a module TVCConnector 262 of Fig. 18. The metadata parser 217 analyzes metadata written in XML.

The shared memory 218 holds metadata to be utilized by the module dtIfSilk 213 and the module dtMintX 219. The module dtMintX 219 manages DLNA (Digital Living Network Alliance). That is, a process for allowing interconnections between household electric products, personal computers, mobile devices, etc., is performed. The module MintProxy 220 is a proxy for sending and receiving data to and from the processing unit EEGS 251. The module DtNetEquipmentSrv 221 communicates commands to and from the processing unit EEGS 251. The module dtNetPlayer 222 functions as a player that plays back content formed mainly of a moving image. The module HttpClient 223 communicates with the content server 14 via the Internet 11.

The processing unit EEGS 251 has a module TVCSrv 261, the module TVCConnector 262, a module xAppStateMgr 263, a module MoviePlayer 264, a module xPlayerEngine 265, a module xNetEquipmentSrv 266, a module 267 having a module xDTPInvoker 268 and a module xDTPSrv 269, and a module xImmControl 270.

The module TVCSrv 261 performs an interface process between the module MintPrpxy 220 of the processing unit AVPPC 201 and the module TVCConnector 262. The module TVCConnector 262 performs scheduling between the modules in the processing unit EEGS 251 in corporation with the module TVC 216 of the processing unit AVPPC 201. The module xAppStateMgr 263 performs booting of the application.
The module MoviePlayer 264 controls the display of a GUI (Graphical User Interface) in the cross media bar. The module xPlayerEngine 265 performs an interface process between the module MoviePlayer 264 and the module xNetEquipmentSrv 266. The module xNetEquipmentSrv 266 communicates commands to and from the module DtNetEquipmentSrv 221 of the processing unit AVPPC 201.

The module xDTPSrv 269 performs management of a DLNA path. The module xDTPInvoker 268 boots the module MoviePlayer 264 from outside. The module xDTPInvoker 268 outputs a command to the module xAppStateMgr 263, and outputs data to the module MoviePlayer 264 by receiving a structural assembly supplied from the module MoviePlayer 264 and returning the structural assembly with the data written therein. The module xImmControl 270 accepts an input of an instruction from the user.

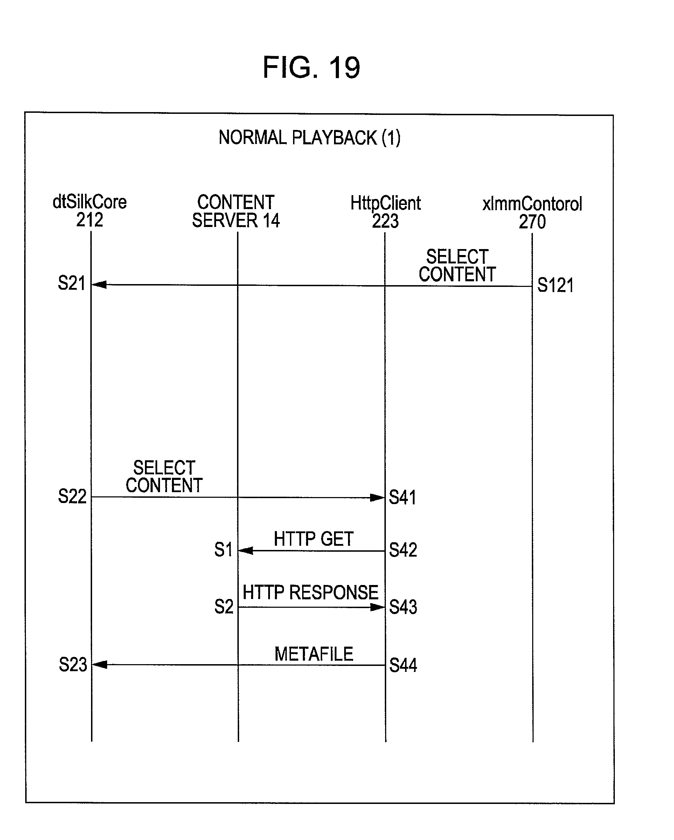

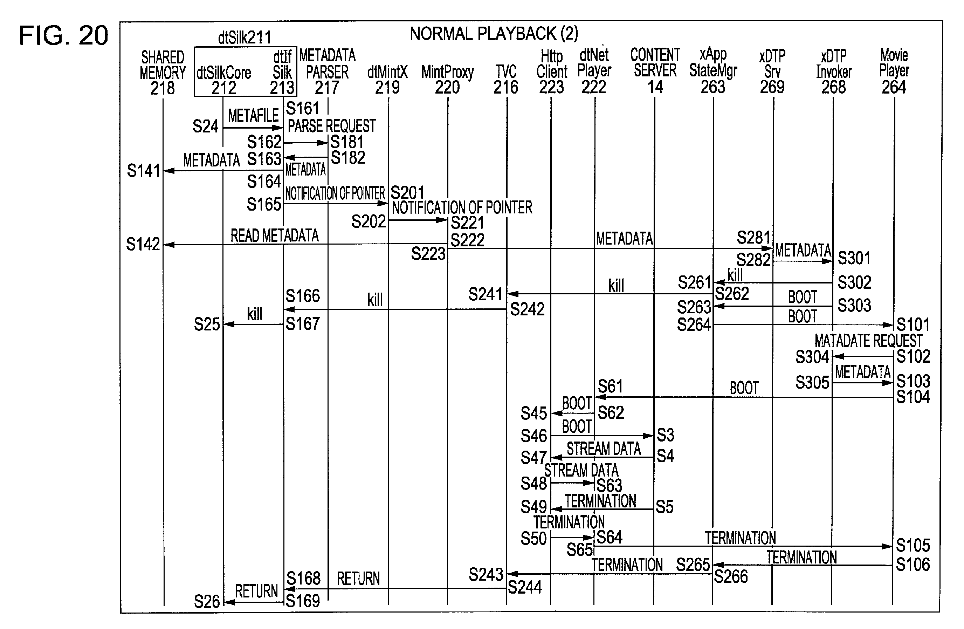

Next, the process of the processing unit AVPPC 201 and the processing unit EEGS 251 during normal playback will be explained with reference to flowcharts of Figs. 19 and 20.

When the user orders access to a portal site provided by the content server 14 by operating the remote controller 13, access to the portal site is performed. The module dtSilkCore 212 executes the browse function to cause the display of the portal TOP screen shown in Fig. 10. When the user further operates the remote controller 13 to select certain content on the portal TOP screen and orders that it be played back, in step S121, the module xImmControl 270 which has accepted this input outputs a content selection request to the module dtSilkCore 212.

Upon receiving this request in step S21, in step S22, the module dtSilkCore 212 outputs the content selection request to the module HttpClient 223.

Upon receiving the content selection request in step S41, in step S42, the module HttpClient 223 sends a request HTTP GET for requesting metadata to the content server 14 via the Internet 11.

In step S1, the communication unit 22 of the content server 14 receives the request HTTP GET. In step S2, the control unit 23 of the content server 14 reads a metafile of the content specified by the request HTTP GET from the storage unit 21, and outputs it as an HTTP response.
The communication unit 22 sends this HTTP response to the receiving apparatus 12 via the Internet 11.

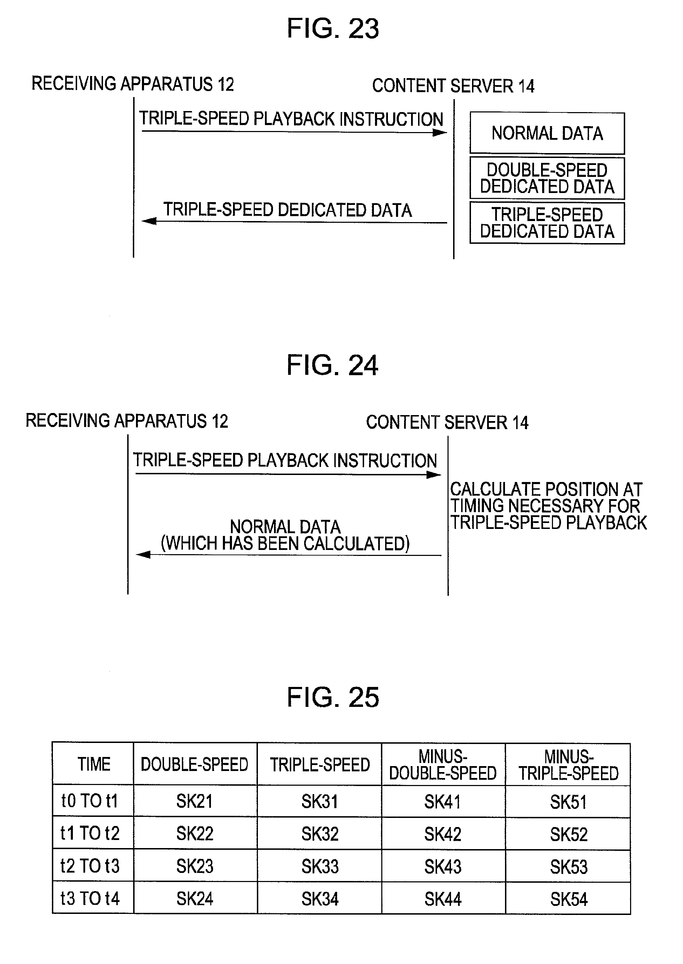

That is, by doing so, the attribute information ERI, the privilege information LLI, and the control information NCI explained with reference to Figs. 5 to 8 are sent as at least a portion of the metadata from the content server 14 to the receiving apparatus 12 using the structure explained with reference to Figs. 3 and 4. At this time, the control information NCI contains a table shown in Fig. 25 described below, as necessary.

Upon receiving the HTTP response in step S43, in step S44, the module HttpClient 223 of the receiving apparatus 12 extracts the metafile stored therein and outputs it to the module dtSilkCore 212. In step S23, the module dtSilkCore 212 receives this metafile.

In step S24, the module dtSilkCore 212 outputs the metafile to the module dtIfSilk 213. Upon receiving this metafile in step S161, in step S162, the module dtIfSilk 213 requests the metadata parser 217 to perform parsing (analysis). Upon receiving this parse request in step S181, in step S182, the metadata parser 217 analyzes the received metafile written in XML, and outputs the acquired metadata to the module dtIfSilk 213. Upon receiving this metadata in step S163, in step S164, the module dtIfSilk 213 outputs this metadata to the shared memory 218.

In step S141, the shared memory 218 stores the received metadata. This eliminates the need for the respective modules to individually redundantly hold metadata whose data amount is large, and allows it to be utilized according to necessity.

In step S165, the module dtIfSilk 213 notifies the module dtMintX 219 of a pointer necessary to read the metadata from the shared memory 218. Upon receiving this pointer in step S201, in step S202, the module dtMintX 219 further notifies the module MintProxy 220 of this pointer. In this manner, the respective modules are only required to perform the notification of a pointer whose data amount is small, and quick processing is possible.

Upon receiving the pointer in step S221, in step S222, the module MintProxy 220 executes a process of reading the metadata from the shared memory 218 on the basis of the pointer.
That is, upon receiving this reading request in step S142, the shared memory 218 provides the metadata stored therein to the module MintProxy 220.

In step S223, the module MintProxy 220 sends the read metadata to the module xDTVSrv 269 of the processing unit EEGS 251. Since the process of sending metadata whose data amount is large is performed by the module MintProxy 220, the remaining modules can individually perform other processes.

Upon receiving the metadata in step S281, in step S282, the module xDTVSrv 269 forwards the received metadata to the module xDTPInvoker 268 in the same module 267. In step S301, the module xDTPInvoker 268 receives this metadata. In this manner, the metadata is held by the module xDTPInvoker 268. Therefore, it is possible to control the playback operation of the content based on this metadata.

The instruction from the user to play back the content has already been accepted in step S121. Thus, when the process of obtaining the metadata has been completed in the manner mentioned above, the module xDTPInvoker 268 switches the operation from the operation of executing the browse function to the operation for obtaining and playing back the content. Specifically, in the case of this embodiment, the module xDTPInvoker 268 performs this switching by stopping the operation of the module dtSilk 211 that executes the browse function before starting a content obtaining process described below.

That is, prior to making active the module dtNetPlayer 222 serving as playback means for playing back the content, in step S302, the module xDTPInvoker 268 requests that the operation of the module dtSilk 211 be stopped (kill) (requests inactive status). Upon receiving this request in step S261, in step S262, the module xAppStateMgr 263 sends this request to the module TVC 216. For detail, this request is sent from the module xAppStateMgr 263 to the module TVC 216 through the module MoviePlayer 264, the module xPlayerEngine 265, the module xNetEquipmentSrv 266, and the module DtNetEquipment 221.

Upon receiving this operation stop request in step S241, in step S242, the module TVC 216 outputs this operation stop request to the module dtIfSilk 213 at an appropriate timing.
Upon receiving this operation stop request in step S166, in step S167, the module dtIfSilk 213 further outputs the operation stop request to the module dtSilkCore 212. In step S25, the module dtSilkCore 212 receives this operation stop request. This makes the module dtSilk 211, that is, the module dtSilkCore 212 and the module dtIfSilk 213, inactive to stop the operation.

In this manner, since the switching of the operation is performed, it is ensured that the content can be obtained without causing each program (module) to malfunction in subsequent processes. Furthermore, in a case where the operation of the module dtSilkCore 212 and the module dtIfSilk 213 is stopped, the capacity of a memory that stores a program during the operation can be reduced, and a reduction in power and cost can be achieved.

After the switching process has been performed in the manner mentioned above, in step S303, the module xDTPInvoker 268 requests the content server 14 to boot the content, that is, to start the playback of the content. Upon receiving this boot request in step S263, in step S264, the module xAppStateMgr 263 forwards the boot request to the module MoviePlayer 264.

Upon receiving this boot request in step S101, the module MoviePlayer 264 boots and, in step S102, requests the content server 14 to transfer metadata necessary to send the content. Upon receiving this transfer request in step S304, in step S305, the module xDTPInvoker 268 reads metadata necessary to request the content server 14 to send the content from among the metadata held in the processing of step S301, and outputs it to the module MoviePlayer 264.

Upon receiving this metadata in step S103, in step S104, the module MoviePlayer 264 outputs a boot request for the content server 14 in accordance with the metadata. This request is sent from the module MoviePlayer 264 to the module dtNetPlayer 222 through the module xPlayerEngine 265, the module xNetEquipmentSrv 266, and the module DtNetEquipment 221.

Upon receiving this boot request in step S61, the module dtNetPlayer 222 is made active and, in step S62, outputs the boot request to the module HttpClient 223. Upon receiving this boot request in step S45, in step S46, the module HttpClient 223 sends the boot request to the content server 14 via the Internet 11.

Upon receiving this request in step S3 through the communication unit 22 of the content server 14, in step S4, the control unit 23 reads the content data of the specified content stored in the storage unit 21, that is, stream data. The communication unit 22 sends this stream data to the receiving apparatus 12 via the Internet 11.

Upon receiving this stream data in step S47, in step S48, the module HttpClient 223 of the receiving apparatus 12 outputs it to the module dtNetPlayer 222.
The module dtNetPlayer 222 causes the receiving apparatus 12 to display an image based on this stream data.

In the manner mentioned above, the content specified by the user is output, and the user can view it.

When the playback of the content has been terminated, in step S5, the control unit 23 of the content server 14 outputs a termination notification. The communication unit 22 outputs this termination notification to the receiving apparatus 12 via the Internet 11.

Upon receiving this termination notification in step S49, in step S50, the module HttpClient 223 of the receiving apparatus 12 outputs this notification to the module dtNetPlayer 222. Upon receiving this termination notification in step S64, the module dtNetPlayer 222 is made inactive and terminates the moving image playback process. At this time, the state becomes "pause".

Further, in step S65, the module dtNetPlayer 222 outputs the termination notification to the module MoviePlayer 264. This notification is supplied from the module dtNetPlayer 222 to the module MoviePlayer 264 through the module DtNetEquipment 221, the module xNetEquipmentSrv 266, and the module xPlayerEngine 265.

After receiving this termination notification in step S105, in step S106, the module MoviePlayer 264 outputs the termination notification to the module xAppStateMgr 263. Upon receiving this termination notification in step S265, in step S266, the module xAppStateMgr 263 outputs the termination notification to the module TVC 216. This termination notification is conveyed from the module xAppStateMgr 263 to the module TVC 216 through the module xNetEquipmentSrv 266 and the module DtNetEquipment 221.

Upon receiving this termination notification in step S243, in step S244, the module TVC 216 outputs an order that the stopping of the operation be canceled at a certain timing to return to the previous operation state to the module dtIfSilk 213. Upon receiving this return order in step S168, in step S169, the module dtIfSilk 213 outputs the return order to the module dtSilkCore 212. In step S26, the module dtSilkCore 212 receives this return order. In this manner, the module dtSilkCore 212 and the module dtIfSilk 213 are made active again, and the operation state is set.

In the manner mentioned above, the operation of the module dtNetPlayer 222 is stopped (made inactive), and, instead, the module dtSilkCore 212 and the module dtIfSilk 213 are brought again into the operation state (active) (are recovered). This ensures that, thereafter, a similar process can be immediately executed when the playback of other content is ordered. Alternatively, other processes utilizing the browse function can be immediately executed.

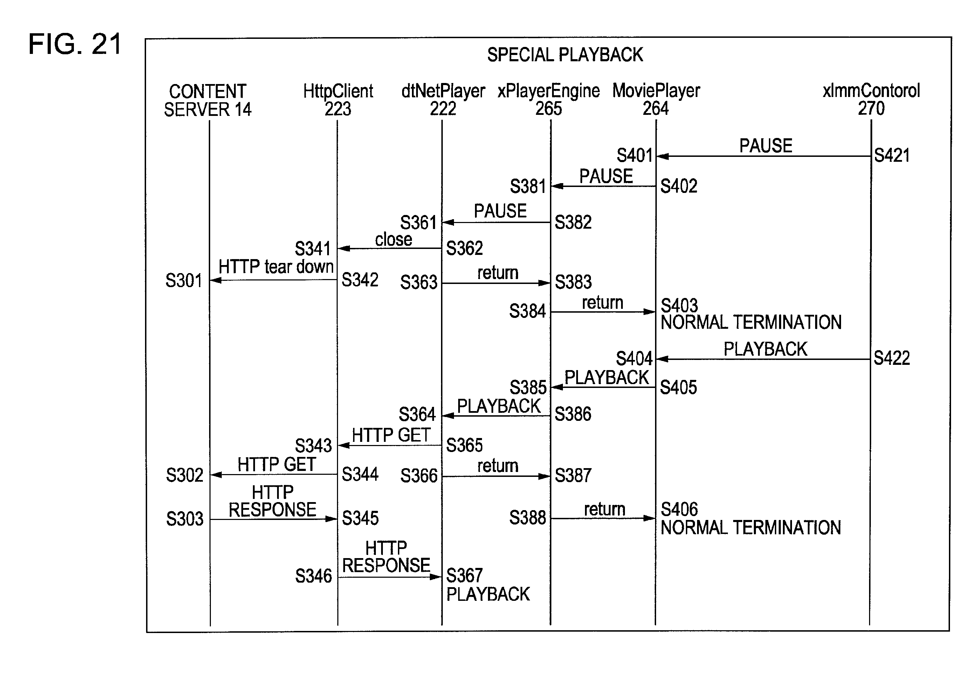

The user can pause an image being played back or can cancel the pause. Next, a process of bringing a playback image into the pause state and canceling the pause state will be explained with reference to Fig. 21.

When the user orders the pause by operating the pause button 56 of the remote controller 13, in step S421, the module xImmControl 270 accepts this operation and requests the module MoviePlayer 264 to perform the pause. Upon receiving this request in step S401, in step S402, the module MoviePlayer 264 outputs a pause request to the module xPlayerEngine 265. Upon receiving this request in step S381, in step S382, the module xPlayerEngine 265 outputs the pause request to the module dtNetPlayer 222. Upon receiving this request in step S361, in step S362, the module dtNetPlayer 222 requests the module HttpClient 223 to halt (close) the playback.

Upon accepting this halt in step S341, in step S342, the module HttpClient 223 outputs a request HTTP tear down (pause) to the content server 14. Upon accepting this request in step S301, the content server 14 temporarily halts the playback operation and sets the pause state.

On the other hand, in step S363, the module dtNetPlayer 222 returns a response "return" representing that the order has been successfully made to the module xPlayerEngine 265. Upon receiving the response "return" in step S383, in step S384, the module xPlayerEngine 265 further outputs the response "return" to the module MoviePlayer 264. In step S403, the module MoviePlayer 264 receives the response "return". Thus, the module MoviePlayer 264 detects the normal completion of the pause operation.

When the user orders the playback by further operating the playback button 55 of the remote controller 13, in step S422, the module xImmControl 270 accepts this operation and requests the module MoviePlayer 264 to perform the playback. Upon receiving this request in step S404, in step S405, the module MoviePlayer 264 outputs a playback request to the module xPlayerEngine 265. Upon receiving this request in step S385, in step S386, the module xPlayerEngine 265 outputs the playback request to the module dtNetPlayer 222. Upon receiving this request in step S364, in step S365, the module dtNetPlayer 222 requests the module HttpClient 223 to perform the playback. Specifically, a request HTTP GET for obtaining image data for playback is output.

Upon accepting the request HTTP GET in step S343, in step S344, the module HttpClient 223 further outputs a request HTTP GET to the content server 14. Upon accepting the request HTTP GET in step S302, the content server 14 resumes the playback operation. That is, the content server 14 reads the stream data from the storage unit 21 and, in step S303, outputs it as an HTTP response.

Upon receiving the HTTP response in step S345, in step S346, the module HttpClient 223 outputs the HTTP response to the module dtNetPlayer 222. Upon receiving this HTTP response in step S367, the module dtNetPlayer 222 plays back the stream data contained in it.

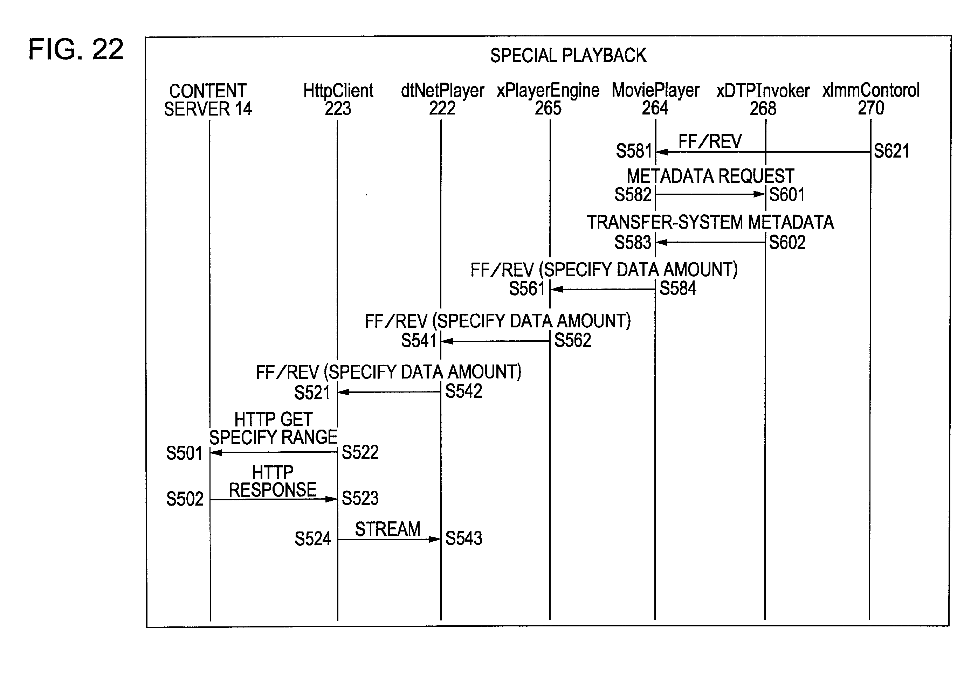

Next, the operation during special playback will be explained with reference to Fig. 22. As explained with reference to Fig. 9, this process is started, for example, when an special playback instruction is made on the basis of the operation of the special playback button 57 during the playback operation.

When the user orders special playback, in step S621, the module xImmControl 270 accepts this instruction. The module xImmControl 270 outputs an operation signal FF/REV corresponding to the accepted special playback instruction to the module MoviePlayer 264. For example, when the fast forward button 58 or the rewind button 59 is operated and variable-speed playback as special playback is ordered, variable-speed playback at a specified speed is ordered. Upon receiving this operation signal in step S581, in step S582, the module MoviePlayer 264 requests the module xDTPInvoker 268 for metadata necessary to control the special playback. Upon receiving this request in step S601, the module xDTPInvoker 268 extracts transfer-system metadata necessary for realization of the special playback from among the metadata stored therein, and, in step S602, sends it to the module MoviePlayer 264.

Upon receiving this metadata in step S583, in step S584, the module MoviePlayer 264 generates a request for sending content at a position and with an amount necessary to realize variable-speed playback at the specified variable-speed playback speed. That is, a skipped data amount (number of bytes) necessary to perform the specified variable-speed playback is computed from the current playback start position, and a certain amount of data located at a position shifted by the data amount is specified in the request. As described above, in this embodiment, variable-speed playback in a range from -3 times to +3 times is made available, and skipped data amounts during the respective variable-speed playback are set: for example, - 512 x 8 kB for minus triple speed, -512 kB for minus double speed, 512 kB for double speed, and 512 x 8 kB for triple speed. That is, a skipped data amount of stream data is set to a data amount according to the speed during variable-speed playback. And this data amount is set to a constant value. As a result, for example, for double-speed playback, a certain amount of data starting from a position shifted by 512 kB with respect to the previous playback start position is requested to be sent, and, for triple-speed playback, a certain amount of data starting from a position shifted by 512 x 8 kB with respect to the previous playback start position is requested to be sent.

Upon receiving this special playback request in step S561, in step S562, the module xPlayerEngine 265 further sends this special playback request to the module dtNetPlayer 222. For detail, the special playback request is transmitted to the module dtNetPlayer 222 through the module xNetEquipmentSrv 266 and the module DtNetEquipment 221. Upon receiving this request in step S541, in step S542, the module dtNetPlayer 222 further sends the special playback request to the module HttpClient 223.

Upon receiving the special playback request in step S521, in step S522, the module HttpClient 223 requests that content having the specified data amount that is located at a position skipped by the skipped data amount be sent. That is, a range is specified by using a beginning point at a position shifted by the skipped data amount in the variable-speed playback direction with respect to a previous playback start position and an end point at a position shifted by a certain amount in the normal playback direction with respect to the beginning point, and the content server 14 is requested to send content in the specified range. This request is sent to the content server 14 via the Internet 11.

In step S501, the communication unit 22 of the content server 14 receives this request. In step S502, in response to this request, the control unit 23 reads stream data in the specified range from the storage unit 21, and causes the communication unit 22 to send it to the receiving apparatus 12 as an HTTP response.

Upon receiving this stream in step S523, in step S524, the module HttpClient 223 of the receiving apparatus 12 sends it to the module dtNetPlayer 222. Upon receiving this stream data in step S543, the module dtNetPlayer 222 causes it to be displayed as a specified special playback image. That is, content specified by the user is obtained in the skipped amount corresponding to the specified variable-speed playback speed via the Internet 11, and is played back at a variable speed.

As shown in Fig. 23, it can be conceived that dedicated data for high-speed playback, such as dedicated data for double-speed playback and dedicated data for triple-speed playback, is prepared in advance in the content server 14 in addition to normal data for normal-speed playback. In this case, for example, if a triple-speed playback request is made from the receiving apparatus 12, the content server 14 selects the dedicated data for triple-speed playback from among the data prepared in advance, and delivers it to the receiving apparatus 12.

However, this would increase the amount of data prepared in the content server 14, and would cause the need to also increase the capacity of the storage unit 21, resulting in an increase in cost.

In addition, as shown in Fig. 24, it can also be conceived that the content server 14 is caused to compute the beginning and end points of a next playback section necessary for high-speed playback. In this case, for example, when a triple-speed playback request is made from the receiving apparatus 12, the content server 14 computes the beginning and end points of a next playback section necessary for triple-speed playback, and delivers normal data located at the computed position to the receiving apparatus 12.

However, this would increase a load on the content server 14, and would cause the request for the content server 14 to have high performance, resulting in an increase in cost.

In contrast, as in the present embodiment, the receiving apparatus 12 sets a content skip amount corresponding to a special playback speed during special playback, and requests the content server 14 to send a certain amount of data located at a position skipped by the set skip amount. This would reduce a load on the content server 14 and would even prevent the request for request for high performance, which can achieve a reduction in cost.

While, in the foregoing embodiment, the receiving apparatus 12 independently sets a skip amount regardless of features of content, a skip amount can be set in accordance with features of content. In this case, for example, the content server 14 holds a table as shown in Fig. 25 for every content item.

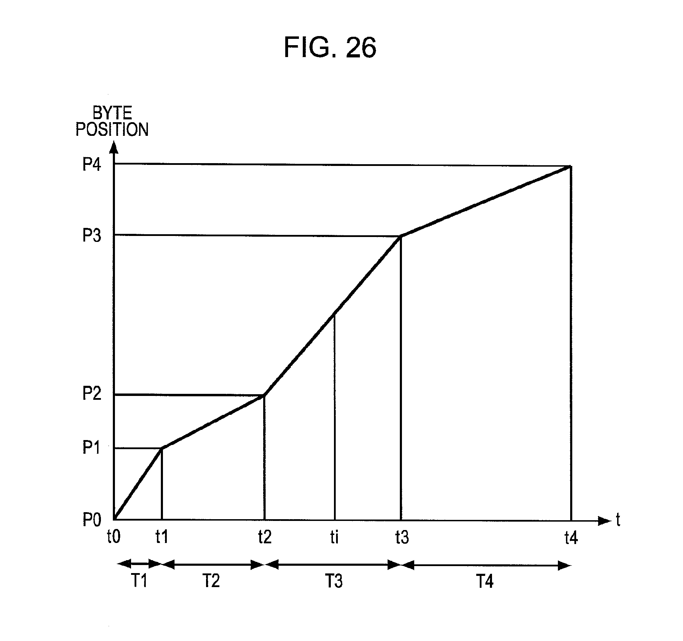

Times t0 to t4 represent playback times. That is, as shown in Fig. 26, in content designated by this table, data from position P0 to position P1 is played back at a constant bit rate for a period T1 from the time t0 to the time t1. Subsequently, data from position P1 to position P2, data from position P2 to position P3, and data from position P3 to position P4 are played back likewise for a period T2 from the time t1 to the time t2, a period T3 from the time t2 to the time t3, and a period T4 from the time t3 to the time t4, respectively. Note that, in Fig. 26, the abscissa represents the playback time from the beginning point of the content (the time t0) and the ordinate represents the data position (byte position), or in other words, the data amount, from the beginning point of the content (the position P0).

The bit rate for the period T1 from the time t0 to the time t1 is given by (P1-P0)/(t1-t0), the bit rate for the period T2 from the time t1 to the time t2 is given by (P2-P1)/(t2-t1), the bit rate for the period T3 from the time t2 to the time t3 is given by (P3-P2)/(t3-t2), and the bit rate for the period T4 from the time t3 to the time t4 is given by (P4-P3)/(t4-t3).

The bit rates for the respective periods, i.e., the period T1 from the time t0 to the time t1, the period T2 from the time t1 to the time t2, the period T3 from the time t2 to the time t3, and the period T4 from the time t3 to the time t4, are constant. That is, the coding scheme of the content is a VBR (Variable Bit Rate) scheme as a whole, and is a CBR (Constant Bit Rate) scheme in each of the periods T1 to T4. It is therefore easy to calculate a skip amount necessary for variable-speed playback in the respective periods. The symbol described in Fig. 25 for each period and each variable-speed playback speed represents a computed skip amount.

For example, the skip amount necessary for double-speed playback in the period T1 from the time t0 to the time t1 is SK21, the skip amount in the period T2 from the time t1 to the time t2 is SK22, the skip amount in the period T3 from the time t2 to the time t3 is SK23, and the skip amount in the period T4 from the time t3 to the time t4 is SK24. Likewise, the skip amount necessary for triple-speed playback in the period T1 from the time t0 to the time t1 is SK31, the skip amount in the period T2 from the time t1 to the time t2 is SK32, the skip amount in the period T3 from the time t2 to the time t3 is SK33, and the skip amount in the period T4 from the time t3 to the time t4 is SK34.

In a case where such a table is used, in the process shown in Figs. 19 and 20 described above, the content server 14 sends a table for content, as a type of metadata (a type of control information ECI), to the receiving apparatus 12 which has made a request for the content. Therefore, in step S301 of Fig. 20, a table forming metadata is held by the module xDTPInvoker 268 in the manner described above. Thus, the receiving apparatus 12 can refer to the table received as one type of metadata to set an accurate skip amount necessary to perform certain variable-speed playback.

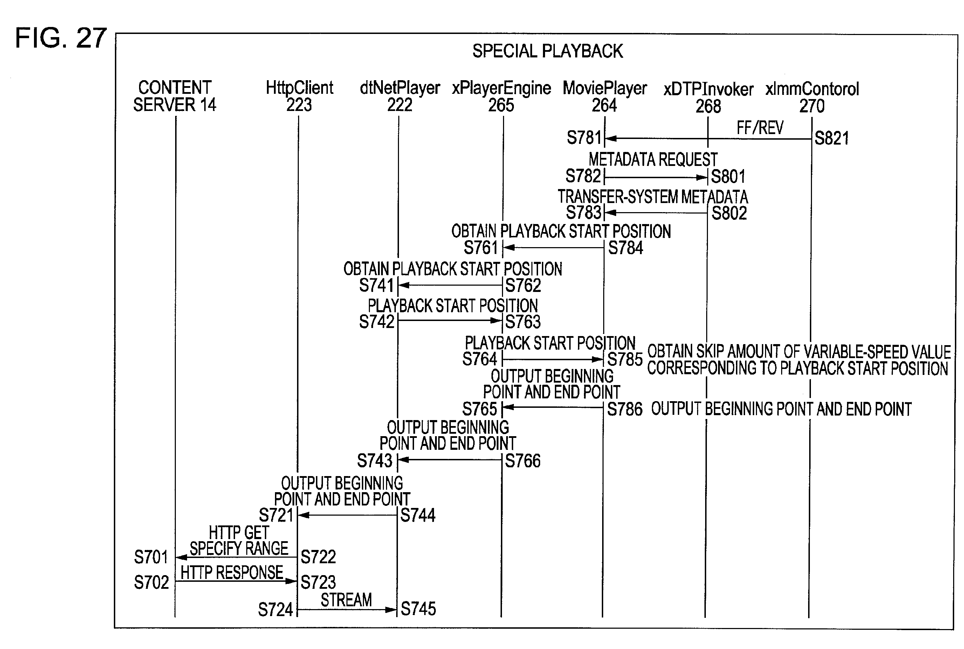

Fig. 27 illustrates the operation of the embodiment in the case of performing variable-speed playback on the basis of the table obtained from the content server 14 and held in the receiving apparatus 12 in this manner.

When the user is to execute variable-speed playback, he or she operates the fast forward button 58 or the rewind button 59 of the special playback button 57 in the remote controller 13 to specify a variable-speed playback speed and also specifies a variable-speed playback direction. Upon accepting this operation in step S821, the module xImmControl 270 outputs an operation signal FF/REV corresponding to the instruction for performing the special playback of the accepted certain content to the module MoviePlayer 264. Upon receiving this operation signal in step S781, in step S782, the module MoviePlayer 264 requests the module xDTPInvoker 268 for metadata necessary to control the special playback. This request also contains a request for a table that defines a skip amount during the variable-speed playback of the specified content. Upon receiving this request in step S801, in step 802, the module xDTPInvoker 268 extracts transfer-system metadata necessary for realization of the special playback from among the metadata stored therein, and sends it to the module MoviePlayer 264.

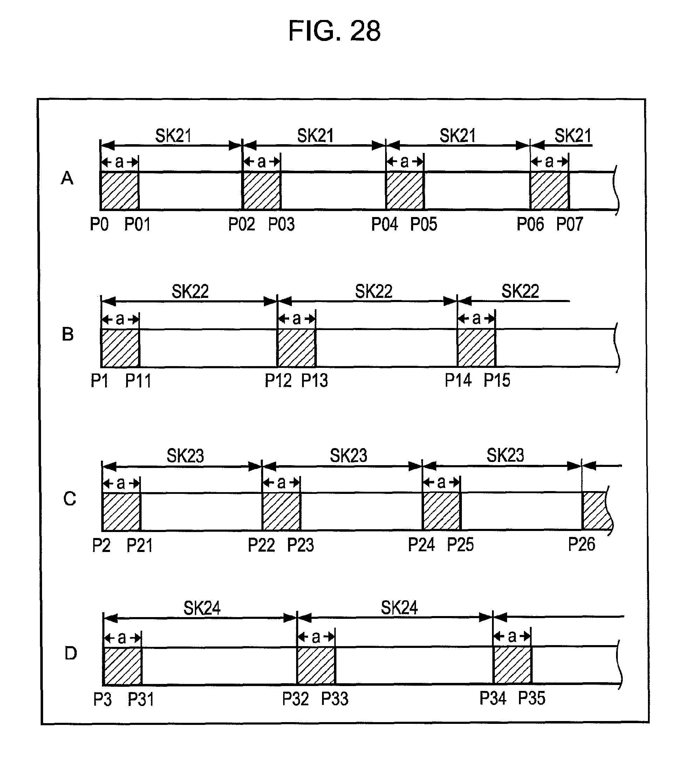

Upon receiving this metadata in step S783, in step S784, the module MoviePlayer 264 outputs a playback start position obtaining request to the module xPlayerEngine 265. That is, the notification of a playback start position of data currently being played back is requested. For example, it is now assumed that an instruction of double-speed playback in the period T1 from the time t0 to the time t1 has been made. As shown in part A of Fig. 28, when a playback section being played back at this time is a section from position P0 to position P02 (when data in a section from position P0 to position P01 is to be played back as the data in the section from the position P0 to the position P02 in order to perform variable-speed playback), the position P0 is set as a playback start position. Likewise, when a playback section is a section from position P02 to position P04 (when data in a section from position P02 to position P03 is to be played back as the data in the section from the position P02 to the position P04 in order to perform variable-speed playback), the position P02 is set as a playback start position. When a playback section is a section from position P04 to position P06 (when data in a section from position P04 to position P05 is to be played back as the data in the section from the position P04 to the position P06 in order to perform variable-speed playback), the position P04 is set as a playback start position.

Upon receiving this playback start position obtaining request in step S761, in step S762, the module xPlayerEngine 265 outputs the playback start position obtaining request to the module dtNetPlayer 222. Upon receiving the playback start position obtaining request in step S741, the module dtNetPlayer 222 knows the playback start position because of the control of the playback operation, and detects a playback start position in the current playback section. In step S742, the module dtNetPlayer 222 outputs the detected playback start position to the module xPlayerEngine 265. Upon receiving this playback start position in step S763, in step S764, the module xPlayerEngine 265 outputs it to the module MoviePlayer 264.

In step S785, the module MoviePlayer 264 receives the playback start position. The module MoviePlayer 264 has obtained the variable-speed value in step S781 and has obtained the table in step S783. Thus, the module MoviePlayer 264 refers to the table to set a skip amount for the variable-speed value corresponding to the playback start position. Now, if an instruction for performing fast playback at double speed has been made and if the playback start position of the data is within the period T1 from the time t0 to the time t1, as is apparent from the table shown in Fig. 25, SK21 is set as the skip amount. If the playback start position of the data is within the period T2 from the time t1 to the time t2, SK22 is set as the skip amount. If the playback start position of the data is within the period T3 from the time t2 to the time t3, SK23 is set as the skip amount. If the playback start position of the data is within the period T4 from the time t3 to the time t4, SK24 is set as the skip amount.

In step S786, the module MoviePlayer 264 computes the beginning and end points of content data to be obtained from the content server 14, and outputs them to the module xPlayerEngine 265. The beginning point is set to a position shifted by the skipped data amount in the variable-speed playback direction with respect to the previous playback start position, and the end point is set to a position shifted by a certain amount (in the case of this embodiment, a value a) in the normal playback direction with respect to the beginning point.

For example, as shown in part A of Fig. 28, if hatched portions in the figure are sequentially played back to realize fast forward variable-speed playback, first, the beginning point is set to the position P0 and the end point is set to the position P01, which is the value a away from the position P0 in the normal playback direction (in the figure, rightward). If the playback start position is the position P0, the beginning point is set to the position P02, which is shifted by the skip amount SK21 in the variable-speed playback direction (in the figure, rightward) with respect to the playback start position, i.e., the position P0, and the end point is set to the position P03, which is shifted by the value a in the normal playback direction with respect to the beginning point, i.e., the position P02. Subsequently, likewise, if the playback start position is the position P02, the beginning point is set to the position P04, which is shifted by the skip amount SK21 in the variable-speed playback direction with respect to the playback start position, i.e., the position P02, and the end point is set to the position P05, which is shifted by the value a in the normal playback direction with respect to the beginning point, i.e., the position P04. If the playback start position is the position P04, the beginning point is set to the position P06, which is shifted by the skip amount SK21 in the variable-speed playback direction with respect to the playback start position, i.e., the position P04, and the end point is set to the position P07, which is shifted by the value a in the normal playback direction with respect to the beginning point, i.e., the position P06.

When rewind variable-speed playback is to be realized, if the playback start position is the position P06, the beginning point is set to the position P04, which is shifted by the skip amount SK21 in the variable-speed playback direction (in the figure, leftward) with respect to the playback start position, i.e., the position P06, and the end point is set to the position P05, which is shifted by the value a in the normal playback direction (in the figure, rightward) with respect to the beginning point, i.e., the position P04. Subsequently, likewise, if the playback start position is the position P04, the beginning point is set to the position P02, which is shifted by the skip amount SK21 in the variable-speed playback direction with respect to the playback start position, i.e., the position P04, and the end point is set to the position P03, which is shifted by the value a in the normal playback direction with respect to the beginning point, i.e., the position P02. If the playback start position is the position P02, the beginning point is set to the position P0, which is shifted by the skip amount SK21 in the variable-speed playback direction with respect to the playback start position, i.e., the position P02, and the end point is set to the position P01, which is shifted by the value a in the normal playback direction with respect to the beginning point, i.e., the position P0.

Upon receiving the beginning point and the end point in step S765, in step S766, the module xPlayerEngine 265 outputs the beginning point and the end point to the module dtNetPlayer 222. Upon receiving them in step S743, in step S744, the module dtNetPlayer 222 outputs the beginning point and the end point to the module HttpClient 223.

Upon receiving the beginning point and the end point in step S721, in step S722, the module HttpClient 223 specifies a range by using the received beginning and end points, and outputs a request HTTP GET to the content server 14. That is, a request for obtaining a certain amount of data located at a position shifted by a skipped data amount (number of bytes) necessary to perform the specified variable-speed playback with respect to the previous playback start position is made.

In step S701, the communication unit 22 of the content server 14 receives this request. In step S702, in response to this request, the control unit 23 reads stream data in the specified range from the storage unit 21, and causes the communication unit 22 to send it to the receiving apparatus 12 as an HTTP response.

Upon receiving this stream in step S723, in step S724, the module HttpClient 223 of the receiving apparatus 12 sends it to the module dtNetPlayer 222. Upon receiving this stream data in step S745, the module dtNetPlayer 222 causes it to be displayed as a specified special playback image. That is, content specified by the user is obtained in the skip amount corresponding to the specified variable-speed playback speed via the Internet 11, and is played back at a variable speed.

Subsequently, the processing after step S784 is repeatedly executed until the variable-speed playback of the content has been performed up to the end or a termination order has been made. That is, for example, after data from the position P0 to the position P01 in part A of Fig. 28 has been obtained and played back in the manner mentioned above, next data from the position P02 to P03, which is skipped by the skip amount SK21, is obtained and played back, and data from the position P04 to P05 and data from the position P06 to P07, which are skipped by the skip amount SK21, are further sequentially obtained and played back. Thereby, variable-speed playback is executed.

As shown in parts B to D of Fig. 28, in a period T2 from time t1 to time t2, the skip amount is SK22 and data from position P1 to P11, data from position P12 to position P13, data from position P14 to position P15, etc., are sequentially obtained and played back. In a range T3 from time t2 to time t3, the skip amount is SK23 and data from position P2 to position P21, data from position P22 to position P23, data from position P24 to position P25, etc., are sequentially obtained and played back. In a range T4 from time t3 to time t4, the skip amount is SK24 and data from position P3 to position P31, data from position P32 to position P33, data from position P34 to position P35, etc., are sequentially obtained and played back.

Note that all data in the ranges designated by the value a are not necessarily played back, and only an amount necessary to realize variable-speed playback is played back.

In this manner, in a case where a table is used, even when the coding scheme is not the CBR scheme but the VBR scheme, variable-speed playback can be realized at more accurate time intervals regardless of the complexity of the content, that is, regardless of the transfer bit rate. The time intervals of images to be skipped can be controlled to be set to substantially a constant value in accordance with the complexity of an image in each scene by, for example, among others, increasing the amount of data to be skipped in a scene having a large number of complicated images.

It is also possible to specify a moving destination (skip amount) of content by time (the number of frames) during special playback. This would allow the display of images having always constant intervals in time. However, there is no problem when the coding scheme of stream data is the CBR scheme, where, if the VBR scheme is employed, the data amount varies with the complexity of screens and it is therefore difficult to quickly detect the position of its skip destination. It can be conceived that if the detection of the position is delayed, the content may not reach the receiving apparatus 12 within the duration of variable-speed playback, in the worst case, depending on the traffic on the Internet 11. In this case, received data is lost in the middle, and smooth special playback cannot be realized.

In contrast, as in the present embodiment, if a skip amount of content during variable-speed playback is set by a data amount, that is, if a length of skip is set by a data amount (byte amount) rather than by time (number of frames), the address of a skip destination can be quickly detected. Thus, even when the value of n in ±n-times fast playback is greater than 3, stable special playback can be realized.

In addition, a partial GET command which allows only a portion of a resource to be partially obtained can be used. Therefore, if the resource has not successfully been obtained due to an error that occurred in the middle of connection, the resource can be sent, starting from a portion subsequent to the successfully obtained portion without resending the entirety thereof. This eventually allows content to be quickly sent or received, in particular, in the case of the present embodiment in which data is to be sent or received via a communication path that is not guaranteed to provide reliable connection, such as the Internet. Thus, stable special playback can be realized.

In the foregoing description, stream data and metadata are provided from a common server. However, they may be provided from different servers.

In this specification, the term network refers to a mechanism in which at least two apparatuses are connected, where information can be conveyed from a given apparatus to another apparatus. Apparatuses that communicate via a network may be independent apparatuses or internal processing units forming a single apparatus.

The term communication encompasses, of course, wireless communication and wired communication, or may be communication including both wireless communication and wired communication, that is, wireless communication may be performed for a given section while wired communication is performed for another section. It may also be such that communication from a given apparatus to another apparatus is performed via wired communication while communication from the other apparatus to the given apparatus is performed via wireless communication.

The series of processes described above may be executed by hardware or may be executed by software. If the series of processes is executed by software, a program constituting the software is installed from a program recording medium into a computer incorporated in dedicated hardware or, for example, a general-purpose personal computer or the like capable of executing various functions by installing various programs therein.

Note that, in this specification, steps describing a program include, of course, processes that are executed in a time series in the order described herein, and also include processes that are executed in parallel or individually, not necessarily in a time series.

In addition, in this specification, the term system is intended to represent an entire apparatus formed of a plurality of apparatuses.

Note that embodiments of the present invention are not to be limited to the embodiment described above, and a variety of modifications can be made without departing from the scope of the present invention.

## Claims

1. An information processing apparatus that controls a process of receiving content from an external apparatus via a network, the information processing apparatus comprising:
browsing means for executing a browse function via the network;
playback means for obtaining the content via the network and playing back the content, the content being selected by a user; and
switching means for switching a process performed by the browsing means when playback performed by the playback means is to be executed.

2. The information processing apparatus according to Claim 1, wherein the switching means performs switching by causing the process performed by the browsing means to be stopped.

3. The information processing apparatus according to Claim 2, wherein the switching means causes the process performed by the browsing means to be recovered when the playback performed by the playback means has been terminated.

4. The information processing apparatus according to Claim 1, wherein the browsing means obtains, via the network, metadata for controlling playback of the content.

5. The information processing apparatus according to Claim 4, further comprising:
analysis means for analyzing the metadata; and
storage means for storing the analyzed metadata.

6. The information processing apparatus according to Claim 1, wherein the browsing means and the playback means form first processing means for executing a process with the external apparatus via the network,
wherein the switching means forms second processing means for executing a process regarding an input from the user, and
wherein the second processing means further includes accepting means for accepting an instruction from the user.

7. The information processing apparatus according to Claim 1, wherein the switching means instructs an amount of the content to be obtained by using a data amount when special playback is to be executed.

8. An information processing method of controlling a process of receiving content from an external apparatus via a network, the information processing method comprising:
a browsing step of executing a browse function via the network;
a playback step of obtaining the content via the network and playing back the content, the content being selected by a user; and
a switching step of switching a process performed by the browsing step when playback performed by the playback step is to be executed.

9. A program for controlling a process of receiving content from an external apparatus via a network, the program causing a computer to execute:
a browsing step of executing a browse function via the network;
a playback step of obtaining the content via the network and playing back the content, the content being selected by a user; and
a switching step of switching a process performed by the browsing step when playback performed by the playback step is to be executed.
